# EUROPÄISCHE PATENTANMELDUNG

(11) **EP 3 629 107 A1**
(43) Veröffentlichungstag der Anmeldung: **01.04.2020**
(21) Anmeldenummer: 18197483.3
(22) Anmeldetag: 28.09.2018
(51) Int. Cl.: G05B 19/042, G06F 8/71

(54) **VERFAHREN UND EINRICHTUNG ZUR WIEDERHERSTELLUNG EINER ENTWICKLUNGSUMGEBUNG FÜR EINE INDUSTRIELLE ANWENDUNG**

(71) Anmelder: Siemens Aktiengesellschaft, 80333 München (DE)
(72) Erfinder: Kob, Peter, 90562 Heroldsberg (DE)

(57) **Zusammenfassung**

Die Erfindung betrifft ein Verfahren und einen Verwaltungsserver (DS_S) zur Bereitstellung einer Entwicklungsumgebung (ES) für eine industrielle Anwendung (AW), wobei die Entwicklungsumgebung (ES) aus einer Anzahl Entwicklungswerkzeugen (COMP) besteht, wobei die Anwendung (AW) mittels der Entwicklungsumgebung (ES) erstellt oder programmiert wird, wobei zu einem späteren Zeitpunkt, insbesondere zur Bearbeitung oder Änderung oder Wartung der Anwendung (AW), die Entwicklungsumgebung (ES) wiederhergestellt wird. Dabei werden zugeordnet zu der Anwendung (AW) Angaben über bei der Erstellung oder Programmierung verwendete Entwicklungswerkzeuge (COMP) und deren Versionsinformationen registriert, wobei zur Wiederherstellung der Entwicklungsumgebung (ES) anhand der Angaben und der Versionsinformationen die Entwicklungswerkzeuge (COMP) in der jeweils registrierten Version aus zumindest einer Datenquelle bezogen werden und die Entwicklungsumgebung (ES) damit in einer Ausführungsumgebung erstellt wird. Das vorstehend beschriebene Verfahren stellt sicher, dass alle Teile einer Entwicklungsumgebung, die wiederhergestellt wird, zusammenpassen. Das Verfahren kann dazu genutzt werden, die Komponenten, insbesondere Entwicklungswerkzeuge oder "Artefakte", eines Entwicklungssystems oder einer Entwicklungsumgebung zu installieren. Eine solche Entwicklungsumgebung kann dann versioniert und in binärer Form zur Verfügung stehen und nach Wiederherstellung sofort genutzt werden. Vorteilhaft kann durch sogenannte "Delta-Vergleiche" das System nur Unterschiede zwischen einzelnen Versionen einer kompletten Entwicklungsumgebung abspeichern, so dass selbst bei vielen gesicherten Versionen der Speicherverbrauch optimal bleibt und die Verwaltung weniger Ressourcen verbraucht.

## Beschreibung

Die Erfindung betrifft ein Verfahren zur Bereitstellung einer Entwicklungsumgebung für eine industrielle Anwendung gemäß dem Oberbegriff des Patentanspruchs 1 und einen Verwaltungsserver zur Bereitstellung einer Entwicklungsumgebung für eine industrielle Anwendung gemäß dem Oberbegriff des Patentanspruchs 9.

Anwendungen, speziell Programme für industrielle Automatisierungsanordnungen und auch für andere Bereiche der computergestützten Technologie, werden durch sogenannte Engineering-Systeme, im folgenden auch "Entwicklungsumgebung" genannt, erstellt und programmiert. Die Entwicklungsumgebungen umfassen dabei regelmäßig einen computergestützten Arbeitsplatz (Einzelplatz- oder Mehrplatz-Systeme), wobei in der Regel unter einer Arbeitsoberfläche ("Portal") oder in einem Anwendungs-Verbund eine Vielzahl von Entwicklungswerkzeugen verfügbar sind, beispielsweise Entwicklungswerkzeuge für die Hardware-Konfiguration, für die Netzwerk-Konfiguration, für das Erstellen und Programmieren der Anwendungen (Editoren, Compiler, ...) und andere. Kurz gesagt ist also eine Entwicklungsumgebung die Gesamtheit der Entwicklungswerkzeuge inclusive des unterlagerten Betriebssystems, die ein Programmierer oder besser "Engineer" benötigt, um eine industrielle Anwendung zu erstellen, zu programmieren und später auch zu ändern, zu warten etc. Oft umfassen die Entwicklungsumgebungen auch Werkzeuge, mit denen ein schließlich erzeugtes Anwendungsprogramm auf eine Ziel-Plattform, beispielsweise eine speicherprogrammierbare Steuerung oder einen sog. "App-Store" oder ein anderes Repository, übertragen und ggf. zur Ausführung gebracht werden kann.

Die industriellen Entwicklungsumgebungen werden heutzutage nicht nur für die Programmierung von speicherprogrammierbaren Steuerungen (PLC), Bedien- und Beobachtungsgeräten, HMI-Servern und anderen Geräten verwendet, sondern auch zur Programmierung sogenannter Edge-Devices, die an der Schnittstelle zwischen den meist in sich geschlossenen industriellen Automatisierungsnetzwerken und öffentlichen Netzwerken, namentlich der sogenannten "Cloud", angeordnet sind. Zudem werden mit den Entwicklungsumgebungen auch Programme, sogenannte Apps, erstellt und gewartet, die auf einem Server in der "Cloud", dem sogenannten App-Store, bereitliegen und von einem Anwender geladen und verwendet werden können. Diese "Apps" dienen im Umfeld der industriellen Anwendungen in der Regel dazu, dass der Benutzer von einem beliebigen Standort aus über einen Cloud-basierten Server und ggf. das Edge-Device auf seine industrielle Automatisierungsanordnung zugreifen kann, beispielsweise zur Überwachung von Produktionsdaten, zur Eingabe von Befehlen etc.

Insbesondere bei der Entwicklung von Applikationen für die "Cloud" und für die Automatisierungsgeräte mit "Edge-Funktionalität" besteht das Problem, dass Applikationen über einen langen Zeitraum hinweg geliefert, gewartet und "upgedatet" werden müssen. Dies ist insofern eine Herausforderung, als sich die Entwicklungsumgebungen bzw. die darin gebündelten Entwicklungswerkzeuge unabhängig voneinander ohne Synchronisierung weiterentwickeln. Zwar sind viele Entwicklungswerkzeuge "abwärtskompatibel", dies bedeutet beispielsweise, dass ein Compiler in einer neueren Version auch Programmcode (Quellcode) kompilieren kann, der mit einer älteren Version eines zugeordneten Editors und für eine ältere Version des Compilers entwickelt wurde. Aber auch in diesem Beispiel kann es schon zu Problemen kommen, denn der neu erzeugte Programmcode ist in der Regel nicht vollkommen identisch zu dem Programmcode, der mit der älteren Version erstellt wurde. Insbesondere bei zeitkritischen Echtzeit-Anwendungen können bereits geringe Unterschiede im Laufzeitverhalten problematisch sein. Viel schwerer wiegt jedoch das Problem, dass sich die Entwicklungswerkzeuge unabhängig voneinander weiterentwickeln, so dass sich immer Unterschiede in der Zusammenarbeit und im Zusammenspiel der einzelnen Werkzeuge ergeben, was insbesondere beim "Laden" eines älteren Projektes, beispielsweise zur Weiterentwicklung, zur Programmpflege etc. zu Problemen führen kann, deren Lösung viel Fachkompetenz und vor allen Dingen viel Zeit und damit Geld kostet.

Neben den Entwicklungswerkzeugen ändert sich auch die sogenannte Basisplattform für die Entwickler, also das Betriebssystem, Systembibliotheken, Software-Bibliotheken, die beschriebene "Portal"-Oberfläche etc. der "Maschine", auf der die Entwicklungsumgebung und damit die Entwicklungswerkzeuge ablaufen. Selbstverständlich können sich auch der Code für die Anwendung (Applikation) selbst und die Hardware, auf welcher die Anwendung oder Applikation ablaufen soll, ändern, was letztlich oft ein Grund dafür ist, überhaupt ein altes Projekt oder ein bereits bestehende Anwendung zu bearbeiten. Insbesondere dann, wenn nach einer längeren Zeit Änderungen an einer Anwendung vorgenommen werden sollen, ist es sehr wahrscheinlich, dass die Entwicklungsumgebung in derjenigen Form, mit der das Programm oder die Anwendung ursprünglich erstellt wurde, nicht mehr zur Verfügung steht oder sehr aufwändig rekonstruiert werden muss.

Bei einer späteren Überarbeitung, Änderung oder "Wartungsmaßnahme" an einer Anwendung muss also zunächst geprüft werden, ob die Entwicklungswerkzeuge die Anwendung noch korrekt "bauen", ob alle dafür notwendigen Entwicklungswerkzeuge (auch "Artefakte" der Entwicklungsumgebung genannt) noch verfügbar sind, ob die Build-Werkzeuge noch damit funktionieren etc. In einigen Fällen ist also bei einer späteren Überarbeitung einer Anwendung oder eines Projektes ein kompletter neuer Test der Applikation notwendig. Dies verursacht hohen Aufwand und kann neue Fehler mit sich bringen.

Bislang wurden verschiedene Strategien verfolgt, um die vorstehend beschriebenen Probleme zu lösen oder zu mildern. In einigen Fällen werden komplette Entwicklungsumgebungen in den verschiedenen Varianten, die verwendet worden sind, archiviert, so dass ältere Versionen wieder installiert werden können. Oft ist auch das mit Problemen verbunden, weil sich sowohl das zugrunde liegende Betriebssystem als auch die unterlagerte Hardware zwischenzeitlich geändert haben. Zudem ist es aufwändig, komplette Entwicklungsumgebungen zu archivieren, weil durch die ständige Weiterentwicklung einzelner Entwicklungswerkzeuge die Vielzahl der Versionen der kompletten Entwicklungsumgebungen bzw. der sich ergebenden "Permutationen" bei der Kombination unterschiedlichster Entwicklungswerkzeuge eine fast unüberschaubare Anzahl von zu archivierenden Entwicklungsumgebungen ergibt und damit die Verwaltung und Datenhaltung schwierig wird.

In seltenen Fällen ist es sogar üblich, einen kompletten Development-PC, also eine komplette Hardware- und Software-Ausstattung, komplett einzulagern, wenn sich beispielsweise eine alte Entwicklungsumgebung nicht auf neuere Hardware installieren lässt und wenn an die Langzeit-Verfügbarkeit des Supports für die Anwendung erhöhte Anforderungen gestellt werden, beispielsweise bei Anwendungen für lang laufende Maschinen und Anlagen wie z.B. Kraftwerke.

In einigen Fällen muss, wie bereits erwähnt, die Anwendung auch auf eine neue Entwicklungsumgebung migriert werden, was einen hohen Aufwand auch bei Test und Abnahme verursacht und wobei weiterhin die Problematik besteht, dass eine "alte" Zielhardware (beispielsweise speicherprogrammierbare Steuerung) adressiert werden muss.

Es ist also eine Aufgabe der vorliegenden Erfindung, die Langzeitverfügbarkeit von Entwicklungsumgebungen für bestehende Anwendungen und Applikationen insbesondere im industriellen Umfeld zu gewährleisten.

Der Kern der Lösung der erfindungsgemäßen Aufgabe sieht vor, dass alle Artefakte oder Entwicklungswerkzeuge der Entwicklungsumgebung in ihren ursprünglich verwendeten Versionen zu einer rekonstruierten Entwicklungsumgebung zusammengestellt werden, so dass das alte Entwicklungsprojekt bzw. die bestehende Anwendung (Applikation) erneut bearbeitet oder gewartet werden kann, ohne dass Versionskonflikte oder andere ungewollte Nebenerscheinungen auftreten. Der Kern der Lösung sieht dabei vor, ein plattformunabhängiges Basissystem zu erschaffen, welches unabhängig von einem unterlagerten Betriebssystem ist. Das Basissystem bringt dabei sowohl Anteile bzw. Erweiterungen des Betriebssystems, die sich auf die Funktionalität der Entwicklungsumgebung auswirken, als auch erforderliche Bibliotheken mit. Dies bedeutet, dass ausgehend von einem Standard-Betriebssystem alle diejenigen Betriebssystem-Erweiterungen, Bestandteile, DLL's etc., die einer häufigen Änderung oder Weiteentwicklung unterlegen, mit diesem Basissystem gespeichert oder "versioniert" werden. Es werden alle Komponenten, die für die Erstellung der Applikation oder Anwendung notwendig sind, in das Basissystem integriert. Dazu gehören dann vorteilhaft auch Entwicklungswerkzeuge wie Compiler, Editoren, Planungs-Tools und andere Entwicklungswerkzeuge. Davon separiert wird der Code der Applikation und Anwendungen gesichert, insbesondere der Quellcode einer Anwendung, z.B. eines Automatisierungsprogramms. Weiterhin separiert werden die Bibliotheken und Module für die Erstellung der Anwendung oder Applikation versioniert oder gespeichert. Damit sind diejenigen Programm- und Bauteilbibliotheken gemeint, die üblicherweise in einem Engineering-System zur Verfügung stehen, um Projekte und Programme effizient programmieren zu können.

Im Stand der Technik wird nur der Source-Code versioniert. Durch die erfindungsgemäße Versionierung des dazu passenden Basissystems kann eine Änderung oder Fehlerbehebung auf der ursprünglichen Plattform durchgeführt werden. Daher müssen die alten, nicht bearbeiteten Teile der Anwendung nicht einem erneuten Test bzw. einer Anpassung auf eine neue Umgebung unterzogen werden. Das führt dazu, dass eine Langzeitverfügbarkeit garantiert werden kann, wie sie in vielen Automatisierungsumgebungen gefordert ist.

Erfindungsgemäß wird ein System oder ein Verwaltungsserver geschaffen, mit dem die Abhängigkeiten zwischen den Entwicklungswerkzeugen und Artefakten voneinander registriert und verwaltet und definiert werden können, andererseits können diese Versionen oder Ausgabestände der Entwicklungswerkzeuge und Artefakte einer erstellten Anwendung bzw. deren Quellen (Sourcecode etc.) zugeordnet werden. Mit einem solchen System werden auch die Datenquellen bzw. Speicherorte verwaltet, von denen die entsprechenden Artefakte oder Entwicklungswerkzeuge, die entsprechenden Bibliotheken und Module und schließlich auch der Quellcode bzw. Programmcode der Anwendung in den entsprechenden Versionen bezogen werden können bzw., sofern keine externen Datenquellen oder -lieferanten für die Entwicklungswerkzeuge oder den Programmcode bestehen, entsprechende Versionen gespeichert werden.

Das System oder Verwaltungsserver, mit dem die Abhängigkeiten zwischen den einzelnen Entwicklungswerkzeugen, Artefakten und Anwendungen bzw. Quellcodes der Anwendungen definiert werden kann, stellt als Stellvertreter sicher, dass die Entwicklungswerkzeuge, Bibliotheken, etc., kurz: Artefakte, aus den verschiedenen Datenquellen langfristig ausgeliefert werden können. Das "Delivery System" (Verwaltungsserver) und dessen Datenbank kann sogar selbst archiviert werden, so dass eine Installation des Delivery Systems auf einer Hardware-Plattform nur im Bedarfsfall erfolgen muss. Das macht es auch möglich, das Delivery System selbst in einem APP-Store oder dergleichen vorzuhalten. Das System hat nicht nur die Aufgabe, die verwendeten "Artefakte" oder Entwicklungswerkzeuge, Bibliotheken, Quellen, etc. zu speichern und zu archivieren, sondern auch, dabei sicherzustellen, dass die Schnittstellen zu den verwendeten Daten- und Programmquellen etc. stabil bleiben. Dies bedeutet, dass mit diesem System der "Umzug" von Daten und Programmen auf andere Server etc. nachvollzogen wird, so dass zu jedem Zeitpunkt die erforderlichen "Artefakte" zu Wiederherstellung einer Entwicklungsumgebung zur Verfügung stehen. Insgesamt kann erfindungsgemäß ein komplettes System geschaffen werden, das sowohl das genannte "Delivery System" als auch das geschilderte Basissystem inklusive der Abhängigkeiten und Zuordnungen archiviert und langfristig wiederherstellen kann.

Die Lösung der Aufgabe sieht insbesondere ein Verfahren gemäß Patentanspruch 1 und eine Anordnung gemäß Patentanspruch 9 vor.

Dabei wird ein Verfahren zur Bereitstellung einer Entwicklungsumgebung für eine industrielle Anwendung vorgeschlagen, wobei die Entwicklungsumgebung aus einer Anzahl Entwicklungswerkzeugen besteht, wobei die Anwendung mittels der Entwicklungsumgebung erstellt oder programmiert wird, wobei zu einem späteren Zeitpunkt, insbesondere zur Bearbeitung oder Änderung oder Wartung der Anwendung, die Entwicklungsumgebung wiederhergestellt wird. Dabei werden zugeordnet zu der Anwendung Angaben über bei der Erstellung oder Programmierung verwendete Entwicklungswerkzeuge und deren Versionsinformationen registriert, wobei zur Wiederherstellung der Entwicklungsumgebung anhand der Angaben und der Versionsinformationen die Entwicklungswerkzeuge in der jeweils registrierten Version aus zumindest einer Datenquelle bezogen werden und die Entwicklungsumgebung damit in einer Ausführungsumgebung erstellt wird. Das vorstehend beschriebene Verfahren stellt sicher, dass alle Teile einer Entwicklungsumgebung, die wiederhergestellt wird, zusammenpassen. Das Verfahren kann dazu genutzt werden, die Komponenten, insbesondere Entwicklungswerkzeuge oder "Artefakte", eines Entwicklungssystems oder einer Entwicklungsumgebung zu installieren. Eine solche Entwicklungsumgebung kann dann versioniert und in binärer Form zur Verfügung stehen und nach Wiederherstellung sofort genutzt werden. Vorteilhaft kann durch sogenannte "Delta-Vergleiche" das System nur Unterschiede zwischen einzelnen Versionen einer kompletten Entwicklungsumgebung abspeichern, so dass selbst bei vielen gesicherten Versionen der Speicherverbrauch optimal bleibt und die Verwaltung weniger Ressourcen verbraucht.

Die Lösung der Aufgabe sieht außerdem einen Verwaltungsserver zur Bereitstellung einer Entwicklungsumgebung für eine industrielle Anwendung vor, wobei die Entwicklungsumgebung aus einer Anzahl Entwicklungswerkzeugen besteht, wobei die Anwendung mittels der Entwicklungsumgebung erstellt oder programmiert wird, und wobei der Verwaltungsserver dazu eingerichtet ist, zu einem späteren Zeitpunkt, insbesondere zur Bearbeitung oder Änderung oder Wartung der Anwendung, die Entwicklungsumgebung wiederherzustellen. Dabei ist der Verwaltungsserver zur Registrierung zu der Anwendung zugeordneter Angaben über bei der Erstellung oder Programmierung verwendete Entwicklungswerkzeuge und deren Versionsinformationen eingerichtet, wobei der Verwaltungsserver zur Wiederherstellung der Entwicklungsumgebung in einer Ausführungsumgebung ("Ziel-Hardware" oder virtuelle Maschine) anhand der Angaben und der Versionsinformationen über die Entwicklungswerkzeuge in der jeweils registrierten Version aus zumindest einer Datenquelle eingerichtet ist. Durch einen solchen Verwaltungsserver können diejenigen Vorteile realisiert werden, die bereits anhand des Verfahrens diskutiert wurden.

Vorteilhafte Ausgestaltungen der Erfindung sind in den abhängigen Patentansprüchen angegeben. Die dabei beschriebenen Merkmale und deren Vorteile können sowohl einzeln, als auch in sinnvoller Kombination miteinander realisiert werden.

Vorteilhaft wird die Anwendung in einem App-Store bereitgestellt, wobei für einen Benutzer der Anwendung auf Anforderung die Entwicklungsumgebung auf einer virtuellen Maschine auf einer Hardware-Plattform, insbesondere in einer Computer-Cloud, wiederhergestellt wird und über Fernzugriffsmittel nutzbar gemacht wird. Somit kann mit einem Produkt, also der Anwendung, auch das passende Bearbeitungswerkzeug zur Verfügung gestellt werden. Dabei kann über den App-Store die Zuordnung zwischen der Anwendung und der dazu passenden versionierten Entwicklungsumgebung verwaltet werden.

Ein unkomplizierter und wenig fehleranfälliger Workflow wird erreicht, indem nach der Wiederherstellung der Entwicklungsumgebung ein Quellcode der Anwendung automatisch in die Entwicklungsumgebung geladen wird.

Eine effiziente Wiederherstellung der Entwicklungsumgebung ist möglich, wenn die Entwicklungsumgebung ein plattformunabhängiges Basissystem als Laufzeitumgebung für die Entwicklungswerkzeuge umfasst, wobei das Basissystem spezifische Erweiterungen des Betriebssystems und spezifische Laufzeitbibliotheken für den Betrieb der Entwicklungswerkzeuge umfasst, und wobei spezifische Informationen, insbesondere Versionsinformationen, über die spezifischen Erweiterungen des Betriebssystems und spezifischen Laufzeitbibliotheken im Zuge der Erstellung oder Programmierung der Anwendung registriert und später bei der Wiederherstellung der Entwicklungsumgebung zur Wiederherstellung des Basissystems verwendet werden.

Eine umfassende Wiederherstellung ist möglich, wenn zur Programmierung der Anwendung Software-Bibliotheken und/oder Software-Module verwendet werden, wobei mit der Anwendung auch Angaben über Versionsinformationen der verwendeten Software-Bibliotheken und/oder Software-Module registriert werden, und wenn bei der Wiederherstellung der Entwicklungsumgebung die Software-Bibliotheken und/oder Software-Module in der registrierten Version bereitgestellt werden.

Vorteilhaft wird ein im Zuge der Erstellung oder Programmierung erstellter Quellcode der Anwendung separat von den Informationen über die Entwicklungsumgebung und separat von einem ausführbaren Code der Anwendung gespeichert. Dadurch kann der Programmcode in einem gebräuchlichen Sourcecode-Managementsystem verwaltet werden. Dabei wird vorteilhaft zur Verwaltung der bezogen auf die Anwendung spezifischen Informationen über die Entwicklungsumgebung und die Verwaltung von Zugriffsinformationen auf die zumindest eine Datenquelle ein Verwaltungsserver verwendet.

Vorteilhaft weist der Verwaltungsserver eine Benutzerschnittstelle und eine Ausführungseinheit zur Wiederherstellung der Entwicklungsumgebung und für eine Zugriffskontrolle auf die wiederhergestellte Entwicklungsumgebung auf, wobei dieses U-ser-Interface in einer vorteilhaften Variante ein Web-Interface ist, welche mit einem Browser oder dergleichen zugreifbar ist.

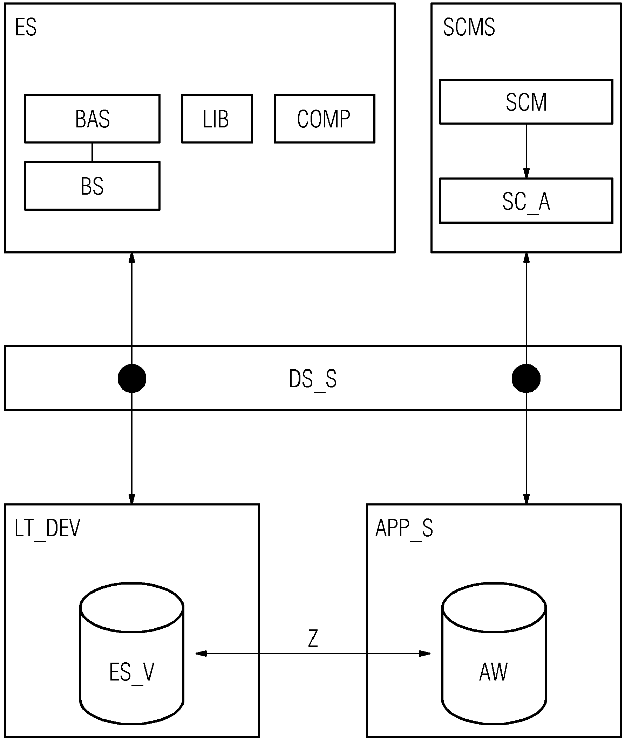

Ein Ausführungsbeispiel des erfindungsgemäßen Verfahrens und des erfindungsgemäßen Verwaltungsservers wird nachfolgend anhand der Zeichnung erläutert.

Dabei zeigt die einzige Figur in schematischer Darstellung ein Entwicklungssystem, ein Sourcecode-Managementsystem, einen Versionsspeicher für Entwicklungsumgebungen und Entwicklungswerkzeuge, einen App-Store für industrielle Anwendungen und einen Server (Verwaltungsserver) mit einem sog. "Delivery-System".

Die Figur zeigt ein Entwicklungssystem ES, welches in diesem vereinfachten Beispiel ein Betriebssystem BS umfasst, auf welchem ein sog. Basissystem BAS aufsetzt. Das Basissystem BAS umfasst grundsätzliche Funktionalitäten, z.B. eine Portal-Benutzeroberfläche zum Aufruf einzelner Entwicklungswerkzeuge, eine Projektverwaltung, ein Workflow-Management etc., aber auch Updates oder Service-Packs für das Betriebssystem BS und Betriebssystem-Komponenten, Erweiterungen des Basis-Betriebssystems BS und weitere spezifische Grundlagen zum Betrieb von Entwicklungswerkzeugen. Weiter umfasst das Entwicklungssystem ES auch Bibliotheken LIB, das sind einerseits Systembibliotheken für das Basissystem BS, und andererseits Software-Bibliotheken für das Engineering von Anwendungen. Dazu können auch Bauteil-Bibliotheken für eine Hardware-Konfiguration, Geräte-Beschreibungsdateien für industrielle Komponenten und dergleichen gehören. Schließlich umfasst das Entwicklungssystem ES auch die eigentlichen Entwicklungswerkzeuge, z.B. Projektierungstools, Editoren etc. Exemplarisch ist ein Compiler COMP als Entwicklungswerkzeug oder "Artefakt" dargestellt.

In diesem Beispiel wird eine Anwendung AW, beispielsweise eine sog. "App" für cloud-basierte Verarbeitung industrieller Produktionsdaten, von dem Entwicklungssystem ES erstellt und zu einem späteren Zeitpunkt gewartet oder bearbeitet.

Alle diese Bestandteile des Entwicklungssystems ES können im Laufe der Zeit in verschiedenen Versionen oder Ausgabeständen verfügbar sein, wobei üblicherweise Versionsnummern oder - bezeichnungen zur Differenzierung dienen.

Das Sourcecode-Managementsystem SCMS besteht im Wesentlichen aus der eigentlich Sourcecode-Management SCM, also insbesondere einem Versionsverwaltungssystem für Programme und Programmfragmente, und dem darin gespeicherten bzw. verwalteten Programmcode SC_A ("Source Code Application") für die Anwendung AW.

Mit dem Entwicklungssystem ES wird die Anwendung AW unter Verwendung des mit dem Sourcecode-Managementsystem SCMS verwalteten Quellcodes erstellt. Nach Abschluss der Arbeiten wird die Anwendung AW, also ausführbarer Programmcode, in einen Appstore APP_S, eingestellt und damit Anwendern zur Verfügung gestellt. Dieser Vorgang kann (muss aber nicht) von dem Verwaltungsserver DS_S ("Delivery System Server) ausgeführt werden. Spätestens zu diesem Zeitpunkt wird der fertigen Anwendung eine Versionsnummer oder -bezeichnung zugewiesen. Gleichzeitig wird von allen maßgeblichen Entwicklungswerkzeugen BAS, LIB, COMP etc. jeweils die bei der Erstellung der Anwendung AW verwendete Version ES_V dokumentiert und in einer Datenbank LT_DEV ("long-term maintenance development environment") mit einer Zuordnung Z zu der Anwendung AW bzw. deren exakten Versionsbezeichnung gespeichert. Dabei repräsentiert die Version ES_V also die Gesamtheit der Versionsstände der verwendeten Artefakte im Entwicklungssystem ES. Vorteilhaft werden dabei auch die Quellen oder Pfade registriert, aus dem die Artefakte ladbar sind, beispielsweise Download-Server des Herstellers des Compilers COMP oder interne Programm-Server. Eine Aufgabe des Verwaltungsservers DS_S kann dabei sein, diese Informationen stets aktuell zu halten und ggf. in Zeitabständen zu überprüfen, ob die Quellen noch verfügbar sind. Der Verwaltungsserver DS_S kann auch einen eigenen Speicher oder Server mit Software, Bibliotheken und den erforderlichen Lizenzen ("keys", Zertifikate) verwalten.

Zu einem späteren Zeitpunkt kann die Anforderung bestehen, die Anwendung AW zu verändern, zu bearbeiten, Fehlersuche oder -korrekturen vorzunehmen oder dgl. Diese Anforderung kann beispielsweise an einer Benutzerschnittstelle des Verwaltungsservers DS_S eingegeben werden, alternativ auch bei einem Zugriff auf den Appstore APP_S, der diesen "Request" dann an den Verwaltungsserver DS_S weiterleitet. Vorzugsweise wird bei dem "Request" eine Ziel-Hardware für das wiederherzustellende Entwicklungssystem ES spezifiziert. Der Verwaltungsserver DS_S installiert dann anhand der Informationen das Entwicklungssystem ES neu auf der spezifizierten Ziel-Hardware, inklusive der erforderlich Bibliotheken LIB und aller anderen Artefakte. Vorteilhaft lädt der Verwaltungsserver DS_S auch den ebenfalls mit einer Versionsbezeichnung versehenen Sourcecode SC_A in das Entwicklungssystem ES oder verlinkt einen Editor des Entwicklungssystems ES mit den richten Sourcecode-Fragmenten der Anwendung AW. Somit kann ein Benutzer sogleich mit einem fertig eingerichteten Entwicklungssystem ES starten.

Die Ziel-Hardware kann auch ein Server in einer "Cloud" sein, wobei vorteilhaft eine virtuelle Maschine mit dem Entwicklungssystem ES "befüllt" wird. In einem solchen Fall stellt der Verwaltungsserver DS_S dann den Fernzugriff auf die virtuelle Maschine bereit.

Während meist nur der Source Code versioniert wird, unterstützt der Verwaltungsserver _DS_S die Versionierung der ursprünglich verwendeten "Generierumgebung" mit dazu passendem Basissystem. Der Vorteil der Lösung besteht darin, dass eine Fehlerbehebung auf der ursprünglichen Plattform passiert. Daher müssen die alten Teile nicht einem erneuten Test bzw. einer Anpassung auf eine neue Umgebung unterzogen werden. Das führt dazu, dass eine Langzeitverfügbarkeit garantiert werden kann wie sie in Automatisierungsumgebungen gefordert ist.

Der Verwaltungsserver DS_S ("Delivery System") sorgt dafür, dass alle Teile zusammenpassen. Das "Delivery System" kann vorteilhaft dazu genutzt werden, die Komponenten des Entwicklungssystems ES zu installieren, welches dann versioniert und in binärer Form zur Verfügung steht und sofort genutzt werden kann. Durch "Delta-Vergleiche" kann das System nur die Unterschiede zu einer Grund-Konfiguration abspeichern, so dass selbst bei einer Vielzahl von Versionen der Speicherverbrauch niedrig bleibt. Das ist ein wesentlicher Unterschied zur Speicherung kompletter virtueller Maschinen mit einem kompletten Entwicklungssystem.

## Patentansprüche

1. Verfahren zur Bereitstellung einer Entwicklungsumgebung (ES) für eine industrielle Anwendung (AW),
wobei die Entwicklungsumgebung (ES) aus einer Anzahl Entwicklungswerkzeugen (COMP) besteht,
wobei die Anwendung (AW) mittels der Entwicklungsumgebung (ES) erstellt oder programmiert wird,
wobei zu einem späteren Zeitpunkt, insbesondere zur Bearbeitung oder Änderung oder Wartung der Anwendung (AW), die Entwicklungsumgebung (ES) wiederhergestellt wird,
**dadurch gekennzeichnet,**
**dass** zugeordnet zu der Anwendung (AW) Angaben über bei der Erstellung oder Programmierung verwendete Entwicklungswerkzeuge (COMP) und deren Versionsinformationen registriert werden,
**dass** zur Wiederherstellung der Entwicklungsumgebung (ES) anhand der Angaben und der Versionsinformationen die Entwicklungswerkzeuge (COMP) in der jeweils registrierten Version aus zumindest einer Datenquelle bezogen werden und die Entwicklungsumgebung (ES) damit in einer Ausführungsumgebung erstellt wird.

2. Verfahren nach Patentanspruch 1,
**dadurch gekennzeichnet,**
**dass** die Anwendung (AW) in einem App-Store (APP_S) bereitgestellt wird, wobei für einen Benutzer der Anwendung (AW) auf Anforderung die Entwicklungsumgebung (ES) auf einer virtuellen Maschine auf einer Hardware-Plattform, insbesondere in einer Computer-Cloud, wiederhergestellt wird und über Fernzugriffsmittel nutzbar gemacht wird.

3. Verfahren nach einem der vorhergehenden Patentansprüche,
**dadurch gekennzeichnet,**
**dass** nach der Wiederherstellung der Entwicklungsumgebung (ES) ein Quellcode der Anwendung (AW) automatisch in die Entwicklungsumgebung (ES) geladen wird.

4. Verfahren nach einem der vorhergehenden Patentansprüche,
**dadurch gekennzeichnet,**
**dass** die Entwicklungsumgebung (ES) ein plattformunabhängiges Basissystem (BAS) als Laufzeitumgebung für die Entwicklungswerkzeuge (COMP) umfasst, wobei das Basissystem (BAS) spezifische Erweiterungen eines Betriebssystems (BS) und spezifische Laufzeitbibliotheken für den Betrieb der Entwicklungswerkzeuge (COMP) umfasst, und wobei spezifische Informationen, insbesondere Versionsinformationen, über die spezifischen Erweiterungen des Betriebssystems (BS) und spezifischen Laufzeitbibliotheken im Zuge der Erstellung oder Programmierung der Anwendung (AW) registriert und später bei der Wiederherstellung der Entwicklungsumgebung (ES) zur Wiederherstellung des Basissystems (BAS) verwendet werden.

5. Verfahren nach einem der vorhergehenden Patentansprüche,
**dadurch gekennzeichnet,**
**dass** zur Programmierung der Anwendung (AW) Software-Bibliotheken (LIB) und/oder Software-Module verwendet werden, wobei mit der Anwendung (AW) auch Angaben über Versionsinformationen der verwendeten Software-Bibliotheken und/oder Software-Module registriert werden, und
**dass** bei der Wiederherstellung der Entwicklungsumgebung (ES) die Software-Bibliotheken (LIB) und/oder Software-Module in der registrierten Version bereitgestellt werden.

6. Verfahren nach einem der vorhergehenden Patentansprüche,
**dadurch gekennzeichnet,**
**dass** ein im Zuge der Erstellung oder Programmierung erstellter Quellcode der Anwendung (AW) separat von den Informationen über die Entwicklungsumgebung (ES) und separat von einem ausführbaren Code der Anwendung (AW) gespeichert werden.

7. Verfahren nach einem der vorhergehenden Patentansprüche,
**dadurch gekennzeichnet,**
**dass** zur Verwaltung der bezogen auf die Anwendung (AW) spezifischen Informationen über die Entwicklungsumgebung (ES) und die Verwaltung von Zugriffsinformationen auf die zumindest eine Datenquelle ein Verwaltungsserver verwendet wird.

8. Verfahren nach einem der vorhergehenden Patentansprüche,
**dadurch gekennzeichnet,**
**dass** der Verwaltungsserver eine Benutzerschnittstelle und eine Ausführungseinheit zur Wiederherstellung der Entwicklungsumgebung (ES) und für eine Zugriffskontrolle auf die wiederhergestellte Entwicklungsumgebung (ES) aufweist.

9. Verwaltungsserver (DS_S) zur Bereitstellung einer Entwicklungsumgebung für eine industrielle Anwendung (AW), wobei die Entwicklungsumgebung (ES) aus einer Anzahl Entwicklungswerkzeugen (COMP) besteht,
wobei die Anwendung (AW) mittels der Entwicklungsumgebung (ES) erstellt oder programmiert wird,
wobei der Verwaltungsserver (DS_S) dazu eingerichtet ist, zu einem späteren Zeitpunkt, insbesondere zur Bearbeitung oder Änderung oder Wartung der Anwendung (AW), die Entwicklungsumgebung (ES) wiederherzustellen, **dadurch gekennzeichnet,**
**dass** der Verwaltungsserver (DS_S) zur Registrierung zu der Anwendung (AW) zugeordneter Angaben über bei der Erstellung oder Programmierung verwendete Entwicklungswerkzeuge (COMP) und deren Versionsinformationen eingerichtet ist,
**dass** der Verwaltungsserver (DS_S) zur Wiederherstellung der Entwicklungsumgebung (ES) in einer Ausführungsumgebung anhand der Angaben und der Versionsinformationen über die Entwicklungswerkzeuge (COMP) in der jeweils registrierten Version aus zumindest einer Datenquelle eingerichtet ist.

10. Verwaltungsserver (DS_S) nach Patentanspruch 9,
**dadurch gekennzeichnet,**
**dass** die Anwendung (AW) in einem App-Store bereitgestellt ist, wobei der Verwaltungsserver (DS_S) eine Benutzerschnittstelle aufweist, die dafür eingerichtet ist, einem Benutzer der Anwendung (AW) auf Anforderung die Entwicklungsumgebung auf einer virtuellen Maschine auf einer Hardware-Plattform, insbesondere in einer Computer-Cloud, wiederherzustellen und über Fernzugriffsmittel nutzbar zu machen.

11. Verwaltungsserver (DS_S) nach einem der Patentansprüche 9-10,
**dadurch gekennzeichnet,**
**dass** der Verwaltungsserver (DS_S) dazu eingerichtet ist, nach der Wiederherstellung der Entwicklungsumgebung (ES) ein Quellcode der Anwendung (AW) automatisch in die Entwicklungsumgebung zu laden.

12. Verwaltungsserver (DS_S) nach einem der Patentansprüche 9-11,
**dadurch gekennzeichnet,**
**dass** die Entwicklungsumgebung (ES) ein plattformunabhängiges Basissystem als Laufzeitumgebung für die Entwicklungswerkzeuge (ES) umfasst, wobei das Basissystem spezifische Erweiterungen des Betriebssystems und spezifische Laufzeitbibliotheken für den Betrieb der Entwicklungswerkzeuge umfasst, und wobei spezifische Informationen, insbesondere Versionsinformationen, über die spezifischen Erweiterungen des Betriebssystems und spezifischen Laufzeitbibliotheken im Zuge der Erstellung oder Programmierung der Anwendung (AW) registriert sind, und
**dass** der Verwaltungsserver (DS_S) dazu eingerichtet ist, diese Informationen bei der Wiederherstellung der Entwicklungsumgebung (ES) zur Wiederherstellung des Basissystems zu verwenden.

13. Verwaltungsserver (DS_S) nach einem der Patentansprüche 9-12,
**dadurch gekennzeichnet,**
**dass** mit der Anwendung (AW) auch Angaben über Versionsinformationen der verwendeten Software-Bibliotheken (LIB) und/oder Software-Module registriert sind, und dass der Verwaltungsserver (DS_S) dazu eingerichtet ist, dass bei der Wiederherstellung der Entwicklungsumgebung (ES) die Software-Bibliotheken (LIB) und/oder Software-Module in der registrierten Version bereitgestellt werden.

14. Verwaltungsserver (DS_S) nach einem der Patentansprüche 9-13,
**dadurch gekennzeichnet,**
**dass** ein im Zuge der Erstellung oder Programmierung erstellter Quellcode der Anwendung (AW) separat von den Informationen über die Entwicklungsumgebung (ES) und separat von einem ausführbaren Code der Anwendung (AW) gespeichert ist.

15. Verwaltungsserver (DS_S) nach einem der Patentansprüche 9-15,
**dadurch gekennzeichnet,**
**dass** der Verwaltungsserver (DS_S) zur Verwaltung der bezogen auf die Anwendung (AW) spezifischen Informationen über die Entwicklungsumgebung und die Verwaltung von Zugriffsinformationen auf die zumindest eine Datenquelle ein Verwaltungsserver (DS_S) eingerichtet ist.

16. Verwaltungsserver (DS_S) nach einem der Patentansprüche 9-16,
**dadurch gekennzeichnet,**
**dass** der Verwaltungsserver (DS_S) eine Benutzerschnittstelle und eine Ausführungseinheit zur Wiederherstellung der Entwicklungsumgebung (ES) und für eine Zugriffskontrolle auf die wiederhergestellte Entwicklungsumgebung (ES) aufweist.
